# EUROPEAN PATENT APPLICATION

(11) **EP 4 693 637 A1**
(43) Date of publication of application: **11.02.2026**
(21) Application number: 23929942.3
(22) Date of filing: 10.11.2023
(51) Int. Cl.: H01M 50/15

(54) **COVER PLATE ASSEMBLY OF BATTERY AND SECONDARY BATTERY COMPRISING SAME**

(30) Priority: 24.03.2023 CN 202320610637 U
(71) Applicant: AESC Jiangsu Co., Ltd., Wuxi, Jiangsu 214443 (CN); AESC Shanghai Co., Ltd., Shanghai 201315 (CN)
(72) Inventor: CHE, Peipei, Wuxi, Jiangsu 214443 (CN)
(74) Representative: Becker, Eberhard
(86) International application number: PCT/CN2023/130957
(87) International publication number: WO 2024/198372

(57) **Abstract**

A cover plate assembly (11) and a secondary battery comprising the cover plate assembly (11). The cover plate assembly (11) comprises a cover plate (2), a liquid injection hole (3) and a sealing member (4), wherein the cover plate (2) is provided with a first recess (211) formed by recessing in the thickness direction of the cover plate (2), and a recess body (212); the liquid injection hole (3) is arranged in the recess body (212); the sealing member (4) is accommodated in the first recess (211) and abuts against the end face of the recess body (212) that faces the first recess (211); the end of a sealing body (41) of the sealing member (4) away from the recess body (212) is provided with an outer edge abutting against a recess wall of the first recess (211); the outer edge forms a first measurement part; an edge of a port of a clearance recess (42) forms a second measurement part; the shortest distance between the first measurement part and the second measurement part is L; the height of the sealing body (41) in the thickness direction of the cover plate (2) is H1; and the range of the ratio of L to H1 is 0.8-3, so as to ensure that an area where the sealing member (4) can be welded is thick enough, thereby reducing the welding heat effect, such that the sealing member (4) does not easily deform, thus preventing cracking at a position where the sealing member (4) and the cover plate (2) are welded.

## Description

### TECHNICAL FIELD

The disclosure relates to the technical field of power batteries, and in particular to a cover plate assembly of a battery and a secondary battery including the same.

### RELATED ART

In the manufacturing process of a secondary battery (such as a lithium-ion battery), after the injection process is completed, the liquid injection hole on the shell cover plate is laser sealed and welded by a sealing member to prevent leakage of electrolyte and ensure the airtightness of the secondary battery.

A large amount of heat is generated during the welding process of the sealing member and the shell cover plate, thus causing stress due to thermal contraction, and causing the welded sealing member to tend to be arched toward the outside of the secondary battery. The greater the degree of arching, the greater the stress. When the stress is too large, partial cracking occurs in the weld mark between the sealing member and the shell cover plate, resulting in seal failure.

### PUBLIC CONTENT

The technical issue to be solved by the disclosure is to overcome the defect in the prior art that the position where the sealing member and the shell cover plate are welded is easily cracked due to welding stress, resulting in sealing failure, and provide a cover plate assembly of a battery and a secondary battery including the same.

The disclosure solves the above technical issues via the following technical solutions:
a cover plate assembly of a battery including a cover plate, a liquid injection hole, and a sealing member;
the cover plate is provided with a recess formed by recessing in a thickness direction of the cover plate, and the recess sequentially includes a first recess and a recess body along the thickness direction of the cover plate;
the liquid injection hole is arranged in the recess body, and the liquid injection hole penetrates the recess body at two ends in the thickness direction of the cover plate;
the sealing member is accommodated in the first recess, and the sealing member abuts against an end face of the recess body that faces the first recess; the sealing member includes a sealing body and a clearance recess, the clearance recess is recessed from an end face of the sealing body that faces the recess body to an inside of the sealing body, and projections of the liquid injection hole on the clearance recess along the thickness direction of the cover plate are all located in the clearance recess;
one end of the sealing body away from the recess body is provided with an outer edge abutting against a recess wall of the first recess, the outer edge forms a first measurement part, and an edge of a port of the clearance recess forms a second measurement part; a shortest distance between the first measurement part and the second measurement part is defined as L, a height of the sealing body in the thickness direction of the cover plate is H1, and measurement units of L and H1 are same; wherein a range of a ratio of L to H1 is 0.8-3.

In this solution, the outer peripheral face of the sealing body and the end face of the sealing body abutting against the recess body can both be used as areas for welding with the recess wall of the first recess. By setting the ratio between L and H1, the area where the sealing member can be welded is ensured to have sufficient thickness, thereby reducing the effect of welding heat, making it less likely for the sealing member to deform, preventing poor welding, reducing the stress on the sealing member, preventing cracking at the position where the sealing member and the cover plate are welded, and improving sealing performance. A sealing pin is inserted into the liquid injection hole to further improve sealing performance. The sealing pin is usually protruded beyond the liquid injection hole. The clearance recess can avoid interference between the sealing pin and the sealing member, avoid warping of the sealing member before welding, and further improve welding effect. In addition, the clearance recess can also reduce the contact area between the sealing member and the recess body, and reduce the pulling force on the weld caused by the arching of the sealing member due to thermal deformation.

Preferably, a height of the cover plate in the thickness direction of the cover plate is defined as T, and measurement units of L and T are same; wherein a range of a ratio of L to T is 0.5-2.

In this solution, the above arrangement avoids interference between the sealing member and the sealing pin, prevents the sealing member from warping before welding, and improves welding effect. Moreover, the effect of welding heat caused by the insufficient thickness of the area where the sealing member can be welded is avoided, such that the sealing member does not easily deform and poor welding is prevented.

Preferably, the range of the ratio of L to T is 0.9-1.1.

In this solution, the above arrangement avoids interference between the sealing member and the sealing pin such that the sealing member does not easily deform, and at the same time prevents the thickness of the area where the sealing member can be welded from being too large or too small, thereby preventing an increase in material costs due to the excessive thickness of the area where the sealing member can be welded, or prevents the effect of reducing the arching of the sealing member from being insignificant due to the insufficient thickness of the area where the sealing member can be welded.

Preferably, the sealing body includes a body and a first protrusion, and the first protrusion is protruded from an end face of the body away from the recess body in a direction away from the body.

In this solution, a first protrusion is disposed at a side of the body away from the recess body, such that the thickness of the sealing member of the thickened area is greater such that arching does not easily occur, thereby reducing the stress on the sealing member, preventing cracking at the position where the sealing member and the cover plate are welded, and improving sealing performance.

Preferably, a height of the first protrusion in the thickness direction of the cover plate is defined as H2, a height of the cover plate in the thickness direction of the cover plate is defined as T, and measurement units of H2 and T are same; wherein a range of a ratio of H2 to T is 0.05-0.6.

In this solution, the above arrangement adjusts the thickness of the thickened area of the sealing member by setting the ratio between the thickness of the first protrusion and the thickness of the cover plate, such that the sealing member of the thickened area portion is not easily arched, thereby reducing the stress on the sealing member, preventing cracking at the position where the sealing member and the cover plate are welded, and improving sealing performance.

Preferably, the range of the ratio of H2 to T is 0.15-0.25.

In this solution, the above arrangement ensures that the sealing member of the thickened area portion is not prone to arching, and at the same time avoids the thickness of the first protrusion being too large or too small (that is, avoids the thickness of the thickened area being too large or too small), thereby preventing an increase in material costs due to an excessively large thickness of the first protrusion, or a lack of significant effect in alleviating the arching of the sealing member due to an excessively small thickness of the first protrusion.

Preferably, projections of the clearance recess on the first protrusion along the thickness direction of the cover plate are all located in the first protrusion.

In this solution, the above arrangement ensures that the thickness of at least a portion of the sealing member thickened by the first protrusion is not reduced due to the arrangement of the clearance recess. The portion of the sealing member has the greatest thickness and is least likely to be arched, thereby reducing the stress on the sealing member, preventing cracking at the position where the sealing member and the cover plate are welded, and improving sealing performance.

Preferably, the sealing body includes a body, a second protrusion, and a second recess, the second protrusion is protruded from an outer peripheral face of the body in a direction away from the body, and an end face of the second protrusion that faces the recess body and the outer peripheral face of the body form the second recess;
the second protrusion abuts against the recess wall of the first recess, and an outer edge of one end of the second protrusion away from the recess body forms the first measurement part.

In this solution, a second protrusion abutting against the recess wall of the first recess is disposed at the outer peripheral side of the body, such that the sealing member is welded to the recess wall of the first recess via the second protrusion. During the welding process, the second protrusion first tends to be arched away from the recess body due to heat. Furthermore, since the second recess is arranged in a side of the second protrusion that faces the recess body, during the welding process, the body is not easily arched along with the second protrusion in the direction away from the recess body, thereby reducing the degree of arching of the sealing member as a whole, and reducing the stress on the sealing member as a whole, such that cracking does not easily occur at the position where the sealing member and the cover plate are welded, thereby improving sealing performance.

Preferably, the sealing member further includes a positioning recess, and the positioning recess is recessed from the end face of the sealing body away from the recess body toward an inside of the sealing body.

In this solution, the positioning recess facilitates the rapid positioning of the sealing member during processing, achieving automated production, and improving production efficiency.

A secondary battery includes a cell assembly, a shell, and the above cover plate assembly of the battery, wherein the cell assembly is accommodated at an inside of the shell and the cover plate assembly of the battery blocks an opening of the shell.

In this solution, the inner space of the shell is sealed by the cooperation between the shell and the cover plate assembly to prevent leakage of the electrolyte in the shell.

The positive progressive effect of the disclosure is that the outer peripheral face of the sealing body and the end face of the sealing body abutting against the recess body can both be used as areas for welding with the recess wall of the first recess. By setting the ratio between L and H1, the area where the sealing member can be welded is ensured to have sufficient thickness, thereby reducing the effect of welding heat, making it less likely for the sealing member to deform, preventing poor welding, reducing the stress on the sealing member, preventing cracking at the position where the sealing member and the cover plate are welded, and improving sealing performance. A sealing pin is inserted into the liquid injection hole to further improve sealing performance. The sealing pin is usually protruded beyond the liquid injection hole. The clearance recess can avoid interference between the sealing pin and the sealing member, avoid warping of the sealing member before welding, and further improve welding effect. In addition, the clearance recess can also reduce the contact area between the sealing member and the recess body, and reduce the pulling force on the weld caused by the arching of the sealing member due to thermal deformation.

### DESCRIPTION OF THE DRAWINGS

FIG. 1 is a schematic diagram of the three-dimensional structure of the secondary battery of embodiment 1 of the disclosure.
FIG. 2 is a schematic structural diagram of the sealing member and the cover plate of embodiment 1 of the disclosure after being separated.
FIG. 3 is a schematic diagram of the internal structure of the cover plate assembly of the battery of embodiment 1 of the disclosure.
FIG. 4 is a schematic structural diagram of the cover plate of embodiment 1 of the disclosure.
FIG. 5 is a schematic cross-sectional structural diagram of the sealing member of embodiment 1 of the disclosure.
FIG. 6 is a schematic diagram of the side structure of the sealing member of embodiment 1 of the disclosure.
FIG. 7 is a schematic diagram of the top view of the sealing member of embodiment 1 of the disclosure.
FIG. 8 is a schematic diagram of the internal structure of the cover plate assembly of the battery of embodiment 2 of the disclosure.
FIG. 9 is a schematic structural diagram of the sealing member of embodiment 2 of the disclosure.

### Description of reference numerals:

Cover plate assembly 11
Shell 12
Cover plate 2
Recess 21
First recess 211
Recess body 212
Liquid injection hole 3
Sealing member 4
Sealing body 41
Body 411
First protrusion 412
Second protrusion 413
Second recess 414
Clearance recess 42
Positioning recess 43
Sealing pin 5

### SPECIFIC EMBODIMENTS

A preferred embodiment is given below, and the disclosure is described more clearly and completely in conjunction with the accompanying drawings.

### Embodiment 1

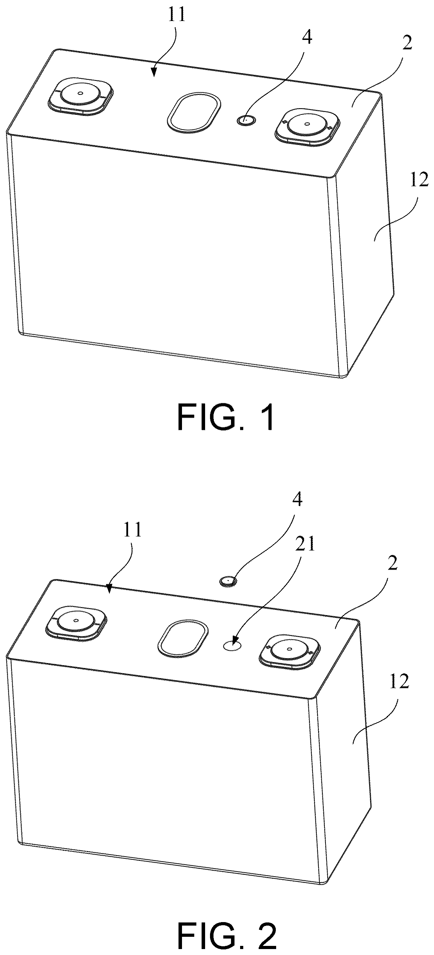

As shown in FIG. 1 and 2, the present embodiment provides a secondary battery including a cover plate assembly 11, a shell 12, and a cell assembly (not shown in the figures). The upper end of the shell 12 has an opening (not shown in the figures), and the cell assembly is placed at the inside of the shell 12 via the opening. The cover plate assembly 11 is connected to the shell 12 and seals the opening of the shell 12 to achieve sealing of the secondary battery.

As shown in FIG. 1 to FIG. 5, the cover plate assembly 11 of the secondary battery includes a cover plate 2, a liquid injection hole 3, a sealing member 4, and a sealing pin 5.

As shown in FIG. 2 to FIG. 4, the cover plate 2 is provided with a recess 21 formed by recessing in the thickness direction of the cover plate 2 toward the shell 12. The recess 21 includes a first recess 211 and a recess body 212 in sequence along the thickness direction of the cover plate 2. The first recess 211 is located at one end of the recess body 212 away from the shell 12, and the upper end of the first recess 211 is connected to the external space of the secondary battery. The liquid injection hole 3 is disposed on the recess body 212, and two ends of the liquid injection hole 3 in the thickness direction of the cover plate 2 pass through the recess body 212, one end of the liquid injection hole 3 is connected with the inside of the shell 12, and the other end of the liquid injection hole 3 is connected with the external space of the secondary battery via the first recess 211, such that electrolyte can be injected into the shell 12 from the outside of the secondary battery via the liquid injection hole 3.

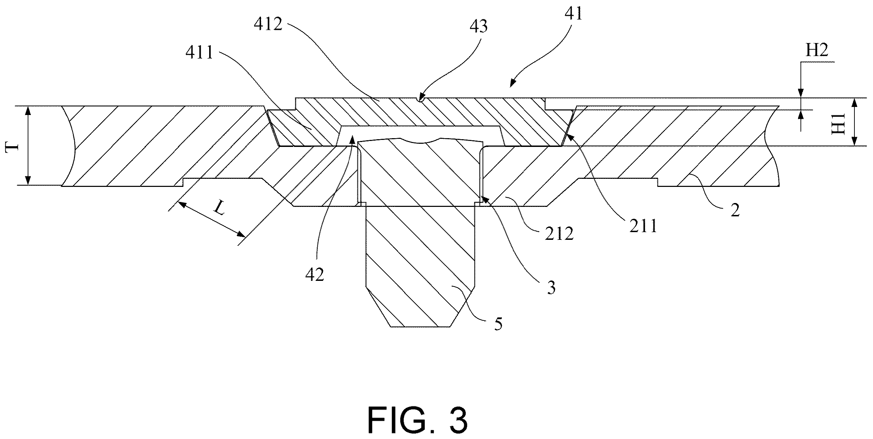

As shown in FIG. 3, the sealing pin 5 is inserted into the liquid injection hole 3 to seal the liquid injection hole 3, thereby preventing the electrolyte in the shell 12 from flowing out of the liquid injection hole 3 and ensuring the airtightness of the secondary battery. The sealing pin 5 in the present embodiment can be made of an elastic member such as rubber, and the sealing pin 5 is interference fit with the liquid injection hole 3 to improve the sealing performance of the liquid injection hole 3. In other alternative embodiments, the sealing pin 5 can also be made of other non-elastic materials as long as the liquid injection hole 3 can be sealed.

As shown in FIG. 3, the sealing member 4 is accommodated in the first recess 211, and the sealing member 4 abuts against an end face of the recess body 212 that faces the first recess 211. The circumferential edge of the sealing member 4 abuts against the recess wall of the first recess 211 and welded to the recess wall of the first recess 211 to further improve the sealing effect of the liquid injection hole 3. The sealing member 4 can also limit the sealing pin 5 to prevent the sealing pin 5 from being completely detached from the liquid injection hole 3, effectively preventing the electrolyte leakage caused by the sealing pin 5 or the sealing member 4 detaching from the cover plate 2.

As shown in FIG. 3 to FIG. 7, the sealing member 4 includes a sealing body 41, a clearance recess 42, and a positioning recess 43.

As shown in FIG. 3 to FIG. 7, the sealing body 41 includes a body 411 and a first protrusion 412. An end face of the body 411 that faces the recess body 212 abuts against the recess body 212, and the first protrusion 412 is protruded from an end face of the body 411 away from the recess body 212 in a direction away from the body 411. In particular, the body 411 in the present embodiment is completely accommodated in the first recess 211, the lower end of the first protrusion 412 is accommodated in the first recess 211, and the upper end of the first protrusion 412 is extended out of the first recess 211. In the present embodiment, the length of the first protrusion 412 in the radial direction of the liquid injection hole 3 is smaller than the length of the body 411 in the radial direction of the liquid injection hole 3. In the present embodiment, the first protrusion 412 is disposed at a side of the body 411 away from the recess body 212, such that the thickness of the sealing member 4 of the thickened area is greater such that arching does not easily occur, thereby reducing the stress on the sealing member 4, preventing cracking at the position where the sealing member 4 and the cover plate 2 are welded, and improving sealing performance.

In other alternative embodiments, the upper end of the body 411 can be aligned with the notch of the first recess 211, and the first protrusion 412 is entirely located at the outside of the first recess 211.

In other alternative embodiments, the length of the first protrusion 412 in the radial direction of the liquid injection hole 3 can also be greater than or equal to the length of the sealing body 41 in the radial direction of the liquid injection hole 3. In particular, when the length of the first protrusion 412 in the radial direction of the liquid injection hole 3 is greater than the length of the sealing body 41 in the radial direction of the liquid injection hole 3, the first protrusion 412 is preferably entirely located at the outside of the first recess 211.

In particular, in the present embodiment, an end face of the first protrusion 412 away from the body 411 is a plane. In other alternative embodiments, an end face of the first protrusion 412 away from the body 411 can also be a curved face protruded toward the outside of the first protrusion 412.

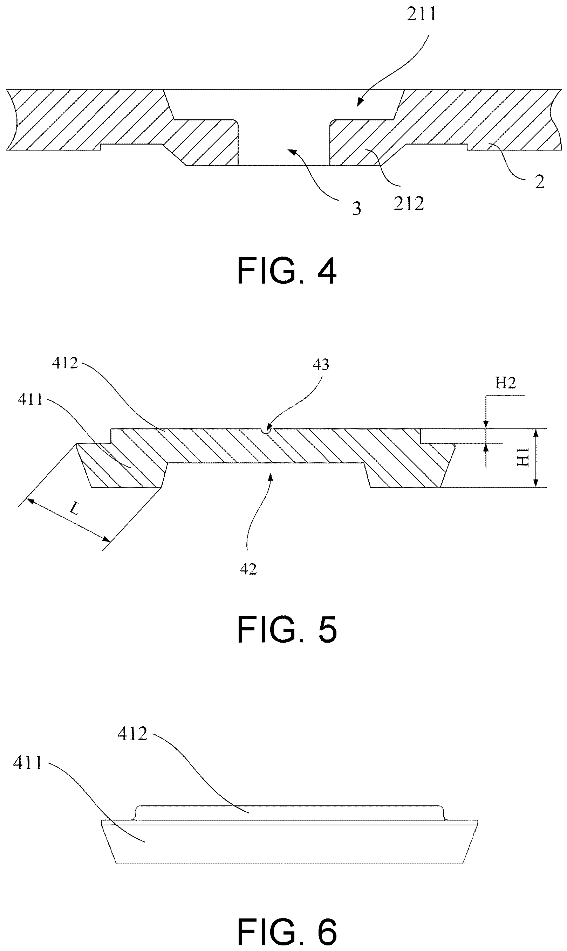

As shown in FIG. 3 and FIG. 5, the clearance recess 42 is recessed from an end face of the sealing body 41 toward the recess body 212 toward the inside of the sealing body 41, and the projections of the liquid injection hole 3 on the clearance recess 42 along the thickness direction of the cover plate 2 are all located in the clearance recess 42. Specifically, the clearance recess 42 is disposed on the body 411. Since the sealing pin 5 is usually protruded beyond the liquid injection hole 3, the clearance recess 42 can avoid the interference between the sealing pin 5 and the sealing member 4, and prevent the sealing member 4 from warping before welding, thereby further improving welding effect.

Furthermore, as shown in FIG. 3 and FIG. 5, the projections of the clearance recess 42 on the first protrusion 412 along the thickness direction of the cover plate 2 are all located inside the first protrusion 412, such that the thickness of the sealing member 4 at least partially thickened by the first protrusion 412 is not reduced due to the provision of the clearance recess 42. This portion of the sealing member 4 has the largest thickness and is least likely to be arched, thereby reducing the stress on the sealing member 4, preventing cracking at the position where the sealing member 4 and the cover plate 2 are welded, and improving sealing performance.

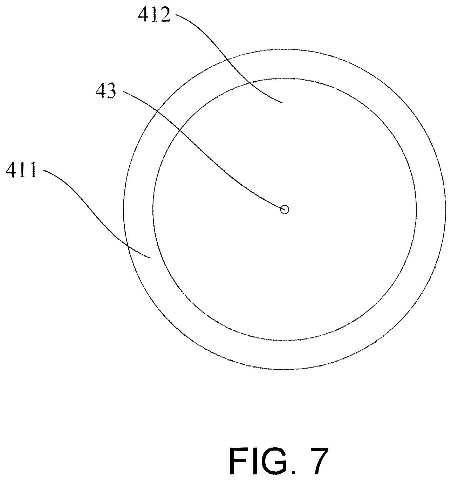

As shown in FIG. 3 and FIG. 7, the positioning recess 43 is disposed at the center of the first protrusion 412. The positioning recess 43 is recessed from an end face of the first protrusion 412 away from the recess body 212 toward the inside of the first protrusion 412, thus facilitating the rapid positioning of the sealing member 4 during processing to achieve automated production and improve production efficiency.

As shown in FIG. 3 and FIG. 5, one end of the sealing body 41 away from the recess body 212 is provided with an outer edge abutting against a recess wall of the first recess, the outer edge forms a first measurement part, and an edge of a port of the clearance recess 42 forms a second measurement part. The shortest distance between the first measurement part and the second measurement part is defined as L, the height of the sealing body 41 in the thickness direction of the cover plate 2 is defined as H1, and the measurement units of L and H1 are the same; wherein the range of the ratio of L to H1 is 0.8-3.

It should be noted that, in order to facilitate the description of the distance L, the outer edge of the body 411 in the present embodiment only refers to the outer edge of the upper end face of the body 411, but this does not mean that the body 411 is welded to the recess wall of the first recess 211 only at this position. The entire outer peripheral face of the body 411 can be used for welding to the recess wall of the first recess 211.

In the present embodiment, the outer peripheral face of the body 411 and the end face of the body 411 abutting against the recess body 212 can both be used as areas for welding with the recess wall of the first recess 211. By setting the ratio between L and H1, the area where the sealing member 4 can be welded is ensured to have sufficient thickness, thereby reducing the effect of welding heat, making it less likely for the sealing member 4 to deform, preventing poor welding, reducing the stress on the sealing member 4, preventing cracking at the position where the sealing member 4 and the cover plate 2 are welded, and improving sealing performance. In addition, the clearance recess 42 can also reduce the contact area between the sealing member 4 and the recess body 212, and reduce the pulling force on the weld caused by the arching of the sealing member 4 due to thermal deformation. It should be noted that the thickness of the area where the sealing member 4 can be welded here does not refer to the thickness of the sealing member 4 in the thickness direction of the cover plate 2 but refers to the length of L.

Specifically, when the ratio of L to H1 is less than 0.8, the area where the sealing member 4 can be welded is smaller, that is, there are fewer welding portions between the sealing member 4 and the cover plate 2, resulting in a lower welding strength between the two, and the sealing member 4 is more likely to deform relative to the cover plate 2.

When the ratio of L to H1 is greater than 3, although the sealing member 4 can be effectively prevented from deforming and arching, the larger the value of L, the greater the height of the body 411 in the thickness direction of the cover plate 2 or the greater the distance from the outer peripheral face of the body 411 to an edge of a port of the clearance recess 42 on the corresponding side in the radial direction of the liquid injection hole 3. The greater the height of the body 411 in the thickness direction of the cover plate 2, either the depth of the first recess 211 in the thickness direction of the cover plate 2 is increased to facilitate welding with the upper outer edge of the body 411; or the upper end of the body 411 is exposed from the first recess 211, increasing the difficulty of welding. Moreover, the more the body 411 is exposed from the first recess 211, the more easily interference with other structures outside the secondary battery occurs. The greater the distance from the outer peripheral face of the body 411 to an edge of a port of the corresponding side of the clearance recess 42 in the radial direction of the liquid injection hole 3, the smaller the length of the clearance recess 42 in the radial direction of the liquid injection hole 3, and interference with the sealing pin 5 easily occurs. In addition, the greater the value of L, the greater the material costs.

In the present embodiment, the ratio of L to H1 is 2, so as to ensure that the area where the sealing member 4 can be welded is thick enough and effectively prevent the sealing member 4 from deforming and arching, and also avoid issues such as material waste and increased welding difficulty caused by L being too large.

As shown in FIG. 3 and FIG. 5, the height of the cover plate 2 in the thickness direction of the cover plate 2 is defined as T, and the measurement units of L and T are the same; wherein the range of the ratio of L to T is 0.5-2. In the present embodiment, by setting the ratio of L to T, interference between the sealing member 4 and the sealing pin 5 is avoided, and the sealing member 4 is prevented from warping before welding, thereby improving welding effect. Moreover, the effect of welding heat caused by the insufficient thickness of the area where the sealing member 4 can be welded is avoided, such that the sealing member 4 does not easily deform and poor welding is prevented.

More preferably, the range of the ratio of L to T is 0.9-1.1, thus avoiding interference between the sealing member 4 and the sealing pin 5 such that the sealing member 4 does not easily deform, and at the same time preventing the thickness of the area where the sealing member 4 can be welded from being too large or too small, thereby preventing an increase in material costs due to the excessive thickness of the area where the sealing member 4 can be welded, or preventing the effect of reducing the arching of the sealing member 4 from being insignificant due to the insufficient thickness of the area where the sealing member 4 can be welded.

As shown in FIG. 3 and FIG. 5, the height of the first protrusion 412 in the thickness direction of the cover plate 2 is defined as H2, and the height of the cover plate 2 in the thickness direction of the cover plate 2 is defined as T, and the measurement units of H2 and T are the same; wherein the range of the ratio of H2 to T is 0.05-0.6. In the present embodiment, the thickness of the thickened area of the sealing member 4 is adjusted by setting the ratio between the thickness of the first protrusion 412 and the thickness of the cover plate 2, such that the sealing member 4 of the thickened area portion is not easily arched, thereby reducing the stress on the sealing member 4, preventing cracking at the position where the sealing member 4 and the cover plate 2 are welded, and improving sealing performance.

More preferably, the range of the ratio of H2 to T is 0.15-0.25, such that the sealing member 4 of the thickened area portion is not prone to arching, and at the same time the thickness of the first protrusion 412 being too large or too small is avoided (that is, the thickness of the thickened area being too large or too small is avoided), thereby preventing an increase in material costs due to an excessively large thickness of the first protrusion 412, or a lack of significant effect in alleviating the arching of the sealing member 4 due to an excessively small thickness of the first protrusion 412.

### Embodiment 2

The cover plate assembly 11 and other structures in the secondary battery in the present embodiment are substantially the same as those in the embodiment, except that the sealing body 41 further includes a second protrusion 413 and a second recess 414.

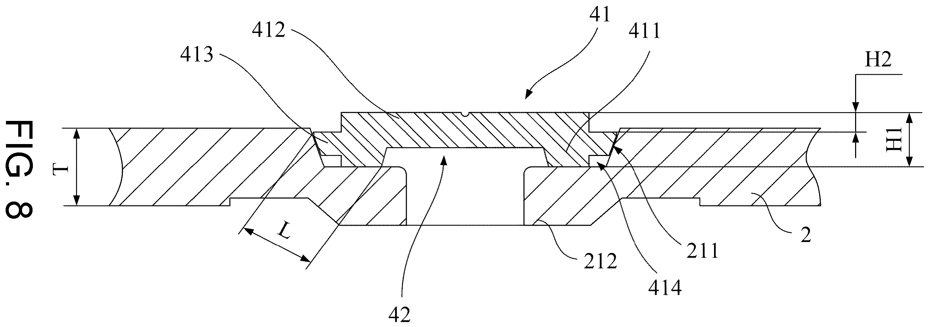

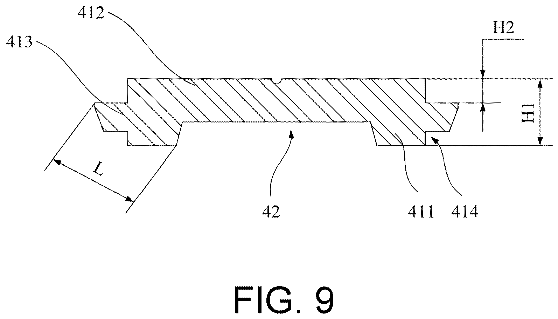

Specifically, as shown in FIG. 8 and FIG. 9, the second protrusion 413 is protruded from the outer peripheral face of the body 411 in a direction away from the body 411, the second protrusion 413 abuts against the recess wall of the first recess 211, and an end face of the second protrusion 413 that faces the recess body 212 and the outer peripheral face of the body 411 form the second recess 414. In particular, the second protrusion 413 in the present embodiment is an annular structure, and the second protrusion 413 is extended around the outer peripheral face of the body 411, such that the recess wall of the first recess 211 is in contact with the second protrusion 413 at all circumferential locations, thus facilitating welding of the abutment between the two without any gap, thereby ensuring sealing effect. The second recess 414 is an annular recess, and the lower end of the second recess 414 and an end away from the body 411 are open, such that the lower end of the second protrusion 413 is suspended, thereby slowing down the body 411 from arching in the direction away from the recess body 212 following the second protrusion 413.

In the present embodiment, the second protrusion 413 abutting against the recess wall of the first recess 211 is disposed at the outer peripheral side of the body 411, such that the sealing member 4 is welded to the recess wall of the first recess 211 via the second protrusion 413. During the welding process, the second protrusion 413 first tends to be arched away from the recess body 212 due to heat. Furthermore, since the second recess 414 is arranged in a side of the second protrusion 413 that faces the recess body 212, during the welding process, the body 411 is not easily arched along with the second protrusion 413 in the direction away from the recess body 212, thereby reducing the degree of arching of the sealing member 4 as a whole, thus reducing the stress on the sealing member 4 as a whole, such that cracking does not easily occur at the position where the sealing member 4 and the cover plate 2 are welded, thereby improving sealing performance.

As shown in FIG. 8 and FIG. 9, the outer edge of one end of the second protrusion 413 away from the recess body 212 forms a first measurement part, and an edge of a port of the clearance recess 42 forms a second measurement part. The shortest distance between the first measurement part and the second measurement part is defined as L, the height of the sealing body 41 in the thickness direction of the cover plate 2 is defined as H1, and the measurement units of L and H1 are the same; wherein the range of the ratio of L to H1 is 0.8-3.

It should be noted that, in order to facilitate the description of the distance L, the outer edge of the second protrusion 413 in the present embodiment only refers to the outer edge of the upper end face of the second protrusion 413, but this does not mean that the second protrusion 413 is welded to the recess wall of the first recess 211 only at this position. The entire outer peripheral face of the second protrusion 413 can be used for welding with the recess wall of the first recess 211, and the lower end face of the body 411 can also be welded to the recess body 212.

In addition, the height of the cover plate 2 in the thickness direction of the cover plate 2 in the present embodiment is T and the height of the first protrusion 412 in the thickness direction of the cover plate 2 is H2, and the distances represented by these symbols and the ranges of the ratios between the values are all the same as those in the embodiment.

In the description of the disclosure, it should be understood that the terms "up", "down", "front", "back", "left", "right", "vertical", "horizontal", "top", "bottom", "inside", "outside", etc., indicating orientations or positional relationships, are all based on the orientations or the positional relationships shown in the accompanying drawings of the devices or assemblies, and are only for the convenience of describing the disclosure and simplifying the description, and do not indicate or imply that the devices or the assemblies referred to need have a specific orientation, be constructed and operated in a specific orientation, and therefore should not be understood as limitations on the disclosure.

Although specific embodiments of the disclosure are described above, those skilled in the art will appreciate that this is only for illustration and the scope of the disclosure is defined by the appended claims. Those skilled in the art can make various changes or modifications to these embodiments without departing from the principles and the essence of the disclosure, but these changes and modifications are all within the scope of the disclosure.

## Claims

1. A cover plate assembly of a battery, **characterized in** comprising a cover plate, a liquid injection hole, and a sealing member;
the cover plate is provided with a recess formed by recessing in a thickness direction of the cover plate, and the recess sequentially comprises a first recess and a recess body along the thickness direction of the cover plate;
the liquid injection hole is arranged in the recess body, and the liquid injection hole penetrates the recess body at two ends in the thickness direction of the cover plate;
the sealing member is accommodated in the first recess, and the sealing member abuts against an end face of the recess body that faces the first recess; the sealing member comprises a sealing body and a clearance recess, the clearance recess is recessed from an end face of the sealing body that faces the recess body to an inside of the sealing body, and projections of the liquid injection hole on the clearance recess along the thickness direction of the cover plate are all located in the clearance recess;
one end of the sealing body away from the recess body is provided with an outer edge abutting against a recess wall of the first recess, the outer edge forms a first measurement part, and an edge of a port of the clearance recess forms a second measurement part; a shortest distance between the first measurement part and the second measurement part is defined as L, a height of the sealing body in the thickness direction of the cover plate is H1, and measurement units of L and H1 are same; wherein a range of a ratio of L to H1 is 0.8-3.

2. The cover plate assembly of the battery of claim 1, **characterized in that** a height of the cover plate in the thickness direction of the cover plate is defined as T, and measurement units of L and T are same; wherein a range of a ratio of L to T is 0.5-2.

3. The cover plate assembly of the battery of claim 2, **characterized in that** the range of the ratio of L to T is 0.9-1.1.

4. The cover plate assembly of the battery of claim 1, **characterized in that** the sealing body comprises a body and a first protrusion, and the first protrusion is protruded from an end face of the body away from the recess body in a direction away from the body.

5. The cover plate assembly of the battery of claim 4, **characterized in that** a height of the first protrusion in the thickness direction of the cover plate is defined as H2, a height of the cover plate in the thickness direction of the cover plate is defined as T, and measurement units of H2 and T are same; wherein a range of a ratio of H2 to T is 0.05-0.6.

6. The cover plate assembly of the battery of claim 5, **characterized in that** the range of the ratio of H2 to T is 0.15-0.25.

7. The cover plate assembly of the battery of claim 4, **characterized in that** projections of the clearance recess on the first protrusion along the thickness direction of the cover plate are all located in the first protrusion.

8. The cover plate assembly of the battery in any one of claims 1 to 7, **characterized in that** the sealing body comprises a body, a second protrusion, and a second recess, the second protrusion is protruded from an outer peripheral face of the body in a direction away from the body, and an end face of the second protrusion that faces the recess body and the outer peripheral face of the body form the second recess;
the second protrusion abuts against the recess wall of the first recess, and an outer edge of one end of the second protrusion away from the recess body forms the first measurement part.

9. The cover plate assembly of the battery in any one of claims 1 to 7, **characterized in that** the sealing member further comprises a positioning recess, and the positioning recess is recessed from the end face of the sealing body away from the recess body toward an inside of the sealing body.

10. A secondary battery, **characterized in** comprising a cell assembly, a shell, and the cover plate assembly of the battery in any one of claims 1 to 9, wherein the cell assembly is accommodated at an inside of the shell, and the cover plate assembly of the battery blocks an opening of the shell.
